# EUROPEAN PATENT APPLICATION

(11) **EP 2 887 267 A1**
(43) Date of publication of application: **24.06.2015**
(21) Application number: 14194677.2
(22) Date of filing: 25.11.2014
(51) Int. Cl.: G06K 9/62, G06K 9/00

(54) **Biometric authentication device and reference data verification method**

(30) Priority: 20.12.2013 JP 2013264349
(71) Applicant: FUJITSU LIMITED, Kawasaki-shi, Kanagawa 211-8588 (JP)
(72) Inventor: Aoki, Takahiro, Kanagawa, 211-8588 (JP)
(74) Representative: Hoffmann Eitle

(57) **Abstract**

A reference data verification method includes: matching first reference data representing biometric information registered for a registered user with second reference data representing the same type of biometric information as biometric information represented in the first reference data of the registered user registered before the first reference data, or third reference data generated based on the same type of biometric information as biometric information represented in the first reference data of the registered user at a time of a biometric authentication process to calculate a degree of similarity between biometric information represented in the first reference data and biometric information represented in the second or third reference data; and determining whether or not biometric information represented in the first reference data is biometric information of the registered user based on the degree of similarity.

## Description

### FIELD

The embodiments discussed herein are related to a biometric authentication device and a reference data verification method and a reference data verification computer program to verify reference data used in the biometric authentication device.

### BACKGROUND

In recent years, a biometric authentication technology has been developed which authenticates a user of a device or a system based on biometric data such as an image representing biometric information such as a vein pattern of a hand or a finger, a fingerprint or a palm print. A biometric authentication device using such a biometric authentication technology acquires, for example, biometric data representing biometric information of a user who intends to use the biometric authentication device. The biometric authentication device matches input biometric information which is biometric information of the user represented in reference data generated from the biometric data with registered biometric information which is biometric information represented in reference data of a registered user registered in advance. The biometric authentication device authenticates the user as a legitimately authorized registered user when the input biometric information matches the registered biometric information based on a result of a matching process. The biometric authentication device then allows the authenticated user to use devices into which the biometric authentication device is embedded or other devices connected to the biometric authentication device.

Biometric information represented in reference data varies due to environmental differences at times of registration and matching, differences in positioning of a body part including biometric information against a sensor to acquire biometric information at times of registration and matching or the like. Consequently, the biometric authentication device may fail to authenticate the user due to a mismatch between the input biometric information and the registered biometric information even when the user is the registered user. Thus, a technology has been proposed in which face information of a user to be authenticated obtained by being captured under a plurality of environments, which is different from each other, is registered in a face authentication database and one-to-N matching is performed on face information captured at a time of authentication and a plurality of pieces of face information registered in the face authentication database (for example, refer to Japanese Laid-open Patent Publication No. 2005-115481).

However, in the technology described in Japanese Laid-open Patent Publication No. 2005-115481, when any of the plurality of pieces of registered face information is not suitable for a matching process, the biometric authentication device may determine that any of the registered face information also does not match face information of a registered user which is obtained at a time of matching.

On the other hand, a technology in which a template is additionally registered in a biometric authentication system (for example, refer to Japanese Laid-open Patent Publication No. 2011-123532) has been proposed. A biometric authentication system disclosed in Japanese Laid-open Patent Publication No. 2011-123532 receives a first template for first biometric information and a second template for second biometric information. The biometric authentication system performs authentication of a user based on a result of a matching between the received first template and a first template of a user registered in advance and temporarily registers the first template and the second template. The biometric authentication system calculates an identity probability from a result of matching of a plurality of temporary registered first templates obtained by repeating a template receipt, authentication and a temporary registration and determines whether or not to register the second registered template based on the identity probability.

### SUMMARY

There is a risk that reference data of another person different from a registered user may be erroneously registered due to, for example, erroneous input of identity information of a registered user by an administrator when reference data representing the same type of biometric information as biometric information registered in advance for the registered user is additionally registered. In such a case, this is not preferable on security since another person may be authenticated as the registered user, i.e., there is a risk that an authentication error (so-called false acceptance) may occur. Even though reference data representing biometric information of another person is registered as reference data of a registered user, reference data of the registered user which has been originally registered will not be eliminated. Therefore, an authentication success rate of the registered user is almost unchanged before and after an additional registration of the reference data. Accordingly, the registered user may not notice even when reference data of another person is registered as reference data of its own. This is related to the fact that, generally in biometric authentication, a plurality of pieces of registered template data is provided and identity authentication is performed based on a maximum value among degrees of similarity (a numerical value indicating how similar pieces of reference data are each other) calculated for a plurality of registered templates. In other words, even when reference data other than that of a registered user is mixed in a plurality of pieces of registered template data, registered template data representing biometric information of the registered user exhibits a high degree of similarity with reference data of a user obtained at a time of matching. Accordingly, it is not possible to notice its existence when attention is paid only to the maximum of degrees of similarity.

On the other hand, in a technology disclosed in Japanese Laid-open Patent Publication No. 2011-123532, biometric information represented in a template to be additionally registered is biometric information different from biometric information represented in an original template used for matching. When a plurality of types of templates is registered, each template is used for matching. In particular, an applicant's identity is authenticated only when degrees of similarity with respect to the plurality of types of templates, which is registered and of different types, are all equal to or greater than a predetermined value. Therefore, when a template representing biometric information of another person is additionally registered, even a user who is a registered user is not authenticated since a difference between biometric information represented in the additionally registered template and biometric information of the registered user is large. Accordingly, an erroneous registration will be determined immediately unlike a case of additionally registering biometric data of one type of biometric information. Thus, in the technology disclosed in Japanese Laid-open Patent Publication No. 2011-123532, a case is not assumed that reference data representing biometric information of another person additionally registered by mistake as reference data of a registered user. Therefore, the technology disclosed in Japanese Laid-open Patent Publication No. 2011-123532 does not detect an erroneous registration when reference data representing the same type of biometric information as biometric information represented in reference data registered in advance is additionally registered.

In one aspect, an object of the present invention is to provide a reference data verification method which can detect that, when reference data is additionally registered, reference data representing biometric information of another person is attempted to be erroneously registered or reference data representing biometric information of another person has been erroneously registered.

According to one embodiment, a reference data verification method is provided. The reference data verification method includes: matching first reference data representing biometric information registered for a registered user with second reference data representing the same type of biometric information of the registered user as biometric information represented in the first reference data, the second reference data having been registered for the registered user before the first reference data, or third reference data representing biometric information of the registered user generated based on the same type of biometric information of the registered user as biometric information represented in the first reference data at a time of a biometric authentication process to calculate a degree of similarity between biometric information represented in the first reference data and biometric information represented in the second or third reference data; and determining whether or not biometric information represented in the first reference data is biometric information of the registered user based on the degree of similarity.

### BRIEF DESCRIPTION OF DRAWINGS

Figure 1 is a schematic structural diagram of a biometric authentication device according to a first embodiment.
Figure 2 is a functional block diagram of a processing unit included in the biometric authentication device.
Figure 3 is a diagram illustrating an example of a matching log table.
Figure 4 is a diagram illustrating an operational flowchart of a biometric authentication process.
Figure 5A is a diagram illustrating an example of a log of degrees of similarity at a time when reference data representing biometric information of a registered user has been additionally registered.
Figure 5B is a diagram illustrating an example of a log of degrees of similarity at a time when reference data representing biometric information of another person has been additionally registered by mistake.
Figure 6 is a diagram illustrating an operational flowchart of an additional registration data verification process.
Figure 7 is a diagram illustrating an example of a matching log table according to a modified example.
Figure 8 is a diagram illustrating an example of the relationship between a degree of similarity of biometric information between reference data to be additionally registered and original reference data and a log of degrees of similarity for the original reference data in the latest biometric authentication process.
Figure 9 is a diagram illustrating an operational flowchart of an additional registration process according to a second embodiment.

### DESCRIPTION OF EMBODIMENTS

Hereinafter, with reference to the drawings, a reference data verification method and a biometric authentication device for implementing the reference data verification method will be described. The biometric authentication device allows an additional registration of reference data representing biometric information of a registered user in order to improve an authentication success rate of the registered user. The biometric authentication device stores a degree of similarity obtained as a result of a matching process of reference data (third reference data) separately generated in a biometric authentication process with additionally-registered reference data (first reference data) and originally-registered reference data (second reference data). The biometric authentication device calculates a statistical representative value of degrees of similarity for the additionally-registered reference data when the biometric authentication process has been performed a predetermined number of times after an additional registration of reference data. The biometric authentication device then determines that reference data representing biometric information of another person different from the registered user has been additionally registered by mistake when the statistical representative value is less than a predetermined threshold value.

In the present embodiment, the biometric authentication device uses a vein pattern of a palm as biometric information to be biometrically authenticated. However, biometric information to be biometrically authenticated may be other biometric information represented in a still image such as a fingerprint, a palm print, a face or an iris, or may also be biometric information represented in biometric data other than an image such as voice.

Furthermore, in the present specification, a term "matching process" is used to indicate a process of calculating a degree of similarity between biometric information represented in two pieces of reference data. In addition, a term "biometric authentication process" is used to indicate not only a matching process but also an entire authentication process including a process of determining whether or not to authenticate a user using a result of the matching process.

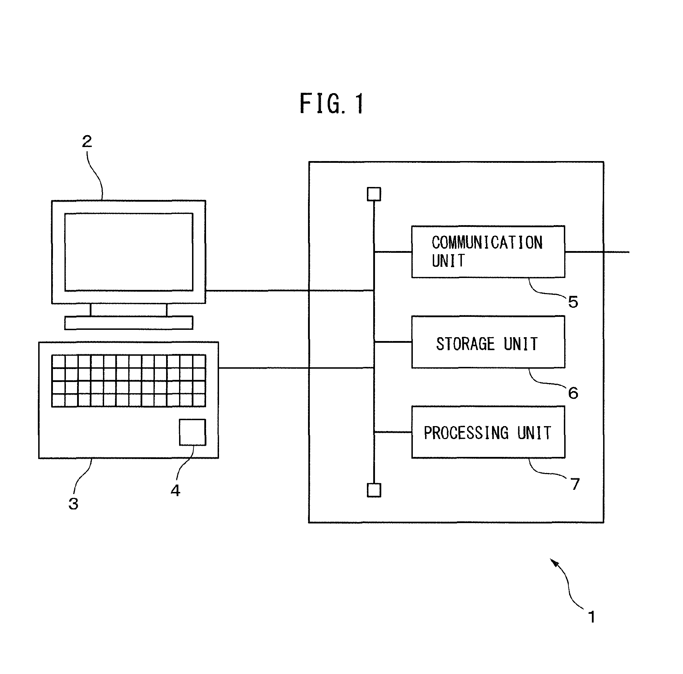

Figure 1 illustrates a schematic structural diagram of a biometric authentication device according to a first embodiment which realizes a reference data verification method. As illustrated in Figure 1, a biometric authentication device 1 includes a display unit 2, an input unit 3, a biometric information acquisition unit 4, a communication unit 5, a storage unit 6 and a processing unit 7. The display unit 2, the input unit 3 and the biometric information acquisition unit 4 may be provided separately from a chassis containing the communication unit 5, the storage unit 6 and the processing unit 7. Alternatively, the display unit 2, the input unit 3, the biometric information acquisition unit 4, the communication unit 5, the storage unit 6 and the processing unit 7 may be contained in a chassis like a notebook personal computer or tablet-type terminal. Furthermore, the biometric authentication device 1 may also include a storage medium access device (not illustrated) for accessing a storage medium such as a magnetic disk, a semiconductor memory card and an optical storage medium. The biometric authentication device 1 may retrieve, for example, via the storage medium access device, a computer program for the biometric authentication process or the reference data verification process which is stored in a storage medium and is executed on the processing unit 7. Then, the biometric authentication device 1 may execute the biometric authentication process or the reference data verification process according to the computer program.

The biometric authentication device 1 generates a biometric image representing a vein pattern of a palm of a user by the biometric information acquisition unit 4 and executes the biometric authentication process using the biometric image. The biometric authentication device 1 then allows the user to use a computer in which the biometric authentication device 1 is implemented when the user has been authenticated as any of registered users as a result of the biometric authentication process. Alternatively, the biometric authentication device 1 sends, via the communication unit 5, to another device (not illustrated), a signal indicating that the user has been authenticated to allow the user to use the another device.

The display unit 2 includes, for example, a display device such as a liquid crystal display. The display unit 2 displays, for example, for the user a message indicating a body part (a right hand or a left hand) used for matching or a guidance message to place a hand to a position at which the biometric information acquisition unit 4 can acquire a suitable biometric image. Furthermore, the display unit 2 displays various kinds of information associated with application executed by the processing unit 7 and the like.

The input unit 3 includes, for example, a keyboard and a pointing device such as a mouse. User identification information such as a user name or a user identification number of the user, a command or data inputted by the user via the input unit 3 are passed to the processing unit 7.

In the present embodiment, the biometric information acquisition unit 4 includes a vein sensor for generating, as biometric data, a biometric image representing a vein pattern of a palm of the user. For this purpose, the biometric information acquisition unit 4 includes, for example, an imaging element array arranged two-dimensionally and an optical system. In the present embodiment, the optical system forms an image of an object which is located within a predetermined distance range from the surface of the biometric information acquisition unit 4 on the imaging element array, such that an image of the vein pattern is captured on the biometric image without the user touching the biometric information acquisition unit 4 by a hand. In addition, the biometric information acquisition unit 4 may include an illumination light source such as an infrared light emitting diode for illuminating the user's hand. Every time generating a biometric image, the biometric information acquisition unit 4 sends the biometric image to the processing unit 7.

The communication unit 5 includes a communication interface circuit for connecting the biometric authentication device 1 to a communication network (not illustrated). The communication unit 5 sends use permission for the user or a result of authentication received from the processing unit 7 to other devices via the communication network.

The storage unit 6 includes, for example, a non-volatile semiconductor memory and a volatile semiconductor memory. The storage unit 6 stores an application program used by the biometric authentication device 1, user identification information and personal configuration information of at least one registered user, various types of data and the like. Furthermore, the storage unit 6 stores a program for executing the biometric authentication process.

In addition, the storage unit 6 stores at least one piece of reference data for each registered user. In the present embodiment, the reference data represents a feature of a vein pattern of either a right or left palm of a registered user and includes, for example, a position or a type of a feature point such as an ending or a bifurcation of a vein extracted from a biometric image generated at a time of registration or additional registration of the registered user. Alternatively, the reference data may be the biometric image itself or a portion thereof generated at a time of registration or additional registration of the registered user.

In particular, when the biometric information acquisition unit 4 is a non-contact type sensor, an image of a vein pattern captured on the biometric image changes according to a positioning of a hand against the biometric information acquisition unit 4 at a time of registration, additional registration or biometric authentication. The positioning of the hand against the biometric information acquisition unit 4 at a time of registration or additional registration and the positioning of the hand against the biometric information acquisition unit 4 at a time of matching do not always coincide. Therefore, it is preferable that a plurality of pieces of reference data for each registered user are stored in order to improve an authentication success rate when a registered user is a user.

In addition, a category flag is associated with each piece of reference data, the category flag for identifying whether reference data is generated at a time of registration of the registered user or generated at a time of additional registration of reference data. Note that, in the following, reference data generated at a time of registration of a registered user is referred to as original reference data for convenience of explanation. In other words, reference data is classified into two categories: original reference data and additionally-registered reference data in the present embodiment.

The storage unit 6 stores a matching log table which records a degree of similarity calculated for originally-registered reference data for a registered user and a degree of similarity calculated for reference data additionally-registered later, every time a biometric authentication process is executed. The matching log table will be described in detail later.

The processing unit 7 includes one or a plurality of processors and a peripheral circuit thereof. The processing unit 7 executes the biometric authentication process by matching reference data generated from a biometric image representing biometric information of the user acquired from the biometric information acquisition unit 4 and reference data of a registered user. Furthermore, the processing unit 7 executes an additional registration process for additionally registering reference data for a registered user. In addition, the processing unit 7 executes an additional registration data verification process for verifying whether or not the additionally-registered reference data for the registered user represents biometric information of the registered user.

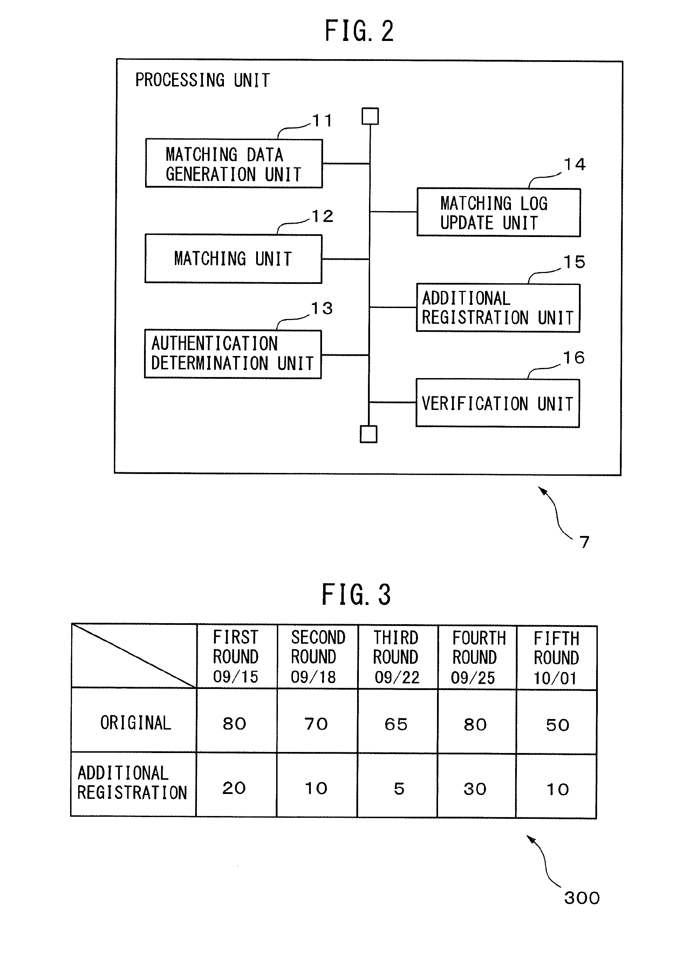

Figure 2 is a functional block diagram of the processing unit 7. As illustrated in Figure 2, the processing unit 7 includes a reference data generation unit 11, a matching unit 12, an authentication determination unit 13, a matching log update unit 14, an additional registration unit 15 and a verification unit 16. Each unit included in the processing unit 7 is a functional module implemented by a computer program executed on a processor included in the processing unit 7. Alternatively, each unit included in the processing unit 7 may be implemented in the biometric authentication device 1 as firmware.

The reference data generation unit 11 among those units included in the processing unit 7 is used at a time of execution of the biometric authentication process and at a time of execution of the additional registration process. The matching unit 12, the authentication determination unit 13 and the matching log update unit 14 are used in the biometric authentication process. On the other hand, the additional registration unit 15 is used in the additional registration process. Furthermore, the verification unit 16 is used in the additional registration data verification process.

### (Biometric authentication process)

Firstly, the biometric authentication process for determining whether or not to authenticate a user as a registered user will be explained. In the present embodiment, the biometric authentication device 1 executes the biometric authentication process according to a so-called one-to-one authentication scheme. For this purpose, at a time of execution of the biometric authentication process, the processing unit 7 receives a biometric image of a user who intends to obtain authentication from the biometric information acquisition unit 4 and also receives user identification information of the user who intends to obtain authentication via the input unit 3.

The reference data generation unit 11 generates, from a biometric image, reference data representing a feature of biometric information captured in the biometric image. For example, when the biometric authentication device 1 performs the matching process by minutiae matching, the reference data generation unit 11 extracts feature points (referred to as minutiae) used by the minutiae matching from the biometric image. The reference data generation unit 11 sets a position of each feature point or a type of each feature point to be reference data.

The reference data generation unit 11 distinguishes between an object area in which a palm is captured and a background area in which a palm is not captured, on a biometric image. For example, luminance values of pixels in which a palm is captured are greater than luminance values of pixels in which a palm is not captured. Thus, the reference data generation unit 11 sets, for example, a set of pixels having luminance values equal to or greater than an object determination threshold value to be an object area and sets a set of pixels having luminance values less than the object determination threshold value to be a background area. The object determination threshold value is set to, for example, a predetermined fixed value (for example, 10) or an average value of luminance values of all pixels in the biometric image.

Next, the reference data generation unit 11 distinguishes, in the object area, between a vein area which is a set of pixels in which a vein is captured and a non-vein area which is a set of pixels in which a vein is not captured. For example, values of pixels in which a vein is captured are less than values of pixels in which a vein is not captured. Thus, the reference data generation unit 11 binarizes the object area such that, for example, a set of pixels having pixel values equal to or less than a vein determination threshold value is set to be a vein area and a set of pixels having pixel values greater than the vein determination threshold value is set to be a non-vein area. A vein determination threshold value is set, for example, to a predetermined fixed value (for example, 150), an average pixel value of all pixels in the object area or a threshold value determined by discrimination analysis of pixel values included in the object area.

Next, the reference data generation unit 11 generates a thinned binary image in which the vein is thinned by, for example, performing a thinning process on a set of pixels having pixel values corresponding to the vein on the binarized object area. By scanning the thinned binary image using a plurality of templates corresponding to either a bifurcation or an ending of a vein, the reference data generation unit 11 detects a position on the thinned binary image at which one of the templates matches. The reference data generation unit 11 then extracts a center pixel of the detected position as a minutia.

Note that the reference data generation unit 11 may extract a minutia from a biometric image using other known methods in which an ending and a bifurcation of a vein are obtained as minutiae. Furthermore, the reference data generation unit 11 may also obtain other features representing a feature of a vein pattern on a biometric image as reference data. For example, the reference data generation unit 11 may partition an object area into a plurality of blocks to obtain the number of veins for each block as reference data.

In addition, when the biometric authentication device 1 performs a matching process by pattern matching, the reference data generation unit 11 may set, as reference data, a biometric image itself or a portion thereof including a vein area on the biometric image extracted from the biometric image. Furthermore, the reference data generation unit 11 may set, to be reference data, an image obtained by performing an edge enhancement process or an unevenness correction process and the like on the entire biometric image or a portion thereof.

The reference data generation unit 11 passes reference data to the matching unit 12. Note that the reference data generation unit 11 passes reference data to the additional registration unit 15 at a time of execution of the additional registration process.

Upon receiving user identification information from the processing unit 7, the matching unit 12 retrieves reference data of a registered user corresponding to the user identification information from the storage unit 6. Note that, when a plurality of pieces of reference data of the registered user is stored, the matching unit 12 retrieves all of the plurality of pieces of reference data of the registered user. The matching unit 12 matches reference data of the user (hereinafter, referred to as input reference data for convenience of explanation) and reference data of the registered user (hereinafter, referred to as registered reference data for convenience of explanation). The matching unit 12 then obtains a degree of similarity of biometric information between the input reference data and the registered reference data as a result of a matching process for each piece of reference data of a registered user.

The matching unit 12 may use, for example, minutiae matching or pattern matching as the matching process.

The matching unit 12 obtains the number of minutiae which match between minutiae included in the registered reference data and minutiae included in the input reference data when the minutiae matching is used. The matching unit 12 can calculate a degree of similarity by dividing the number of those matched by the number of minutiae extracted for a vein pattern of the user included in the input reference data.

Alternatively, when pattern matching is used, the matching unit 12 calculates normalized correlation values while changing a relative positon between the biometric image of the user obtained at a time of biometric authentication, which is the input reference data, and the biometric image of the registered user which is the registered reference data. The matching unit 12 then sets the maximum value of the normalized correlation values to be the degree of similarity. Note that the matching unit 12 may normalize the value of the degree of similarity to be included in a predetermined value range (for example, 0 to 100).

The matching unit 12 obtains the maximum value among degrees of similarity calculated for each piece of registered reference data. Note that, when registered reference data includes only one piece, the calculated degree of similarity becomes the maximum value of the degree of similarity. The matching unit 12 passes the maximum value of the degree of similarity and the user identification information of the registered user to the authentication determination unit 13.

Furthermore, the matching unit 13 obtains the maximum value of the degree of similarity for each category to which the registered reference data belongs. In other words, the matching unit 12 obtains the maximum value of the degree of similarity Smaxb for the originally-registered reference data and the maximum value of the degree of similarity Smaxa for the additionally-registered registered reference data. The matching unit 12 then passes Smaxb and Smaxa to the matching log update unit 14.

The authentication determination unit 13 determines whether or not to authenticate the user as the registered user according to a matching result from the matching unit 12. In the present embodiment, the authentication determination unit 13 determines that biometric information of the user matches biometric information of the registered user to be matched when the maximum value of the degree of similarity is equal to or greater than an authentication determination threshold value. The authentication determination unit 13 then authenticates the user as the registered user. Upon authenticating the user, the authentication determination unit 13 notifies the processing unit 7 of the authentication result.

On the other hand, the authentication determination unit 13 determines that biometric information of the user do not match biometric information of the registered user to be matched when the maximum value of the degree of similarity is less than the authentication determination threshold value. In this case, the authentication determination unit 13 does not authenticate the user.

The authentication determination unit 13 notifies the processing unit 7 of the authentication result indicating that authentication of the user has failed. The processing unit 7 causes the display unit 2 to display authentication result information representing the authentication result.

It is preferable that the authentication determination threshold value be set to a value such that the authentication determination unit 13 succeeds in authentication only when the registered user is a user. It is also preferable that the authentication determination threshold value be set to a value such that the authentication determination unit 13 fails in authentication when a person different from any registered user is a user. For example, the authentication determination threshold value may be set to a value obtained by adding a value obtained by multiplying a difference between the maximum value and the minimum value possible for the degree of similarity by 0.7 to the minimum value of the degree of similarity.

The matching log update unit 14 updates the matching log table by adding Smaxb and Smaxa to the matching log table for a registered user identified by inputted user identification information. As described above, Smaxb is the maximum value of a degree of similarity calculated for the original registered reference data and Smaxa is the maximum value of a degree of similarity calculated for the additionally-registered registered reference data. Figure 3 is a diagram illustrating an example of a matching log table. Execution time, Smaxb and Smaxa of each biometric authentication process are recorded in each column of a matching log table 300 in order from the top. Note that it is assumed in this example that the degree of similarity is normalized so as to become any value within a range of values between 0 and 100 and that the more similar two pieces of biometric information to be matched is, the greater a value of a degree of similarity is. For example, the first round of the biometric authentication process results in Smaxb = 80 and Smaxa = 20 and the second round of the biometric authentication process results in Smaxb = 70 and Smaxa = 10.

When a plurality of pieces of reference data is included in each category, an attack against a biometric authentication device such as a hill climbing attack can be prevented by recording only the maximum value of degrees of similarity for each category in the matching log table, even when by any chance the matching log table is leaked to a third party. Note that the hill climbing attack makes unauthorized access possible by finding biometric information matching registered biometric information by examining a change of a degree of similarity when biometric information generated in a pseudo manner is inputted to a biometric authentication device while changing it gradually. Since the matching log table 300 does not record a degree of similarity for each piece of reference data, it is difficult for a third party to find biometric information matching biometric information of a registered user even when the third party who can view the matching log table performs the hill climbing attack.

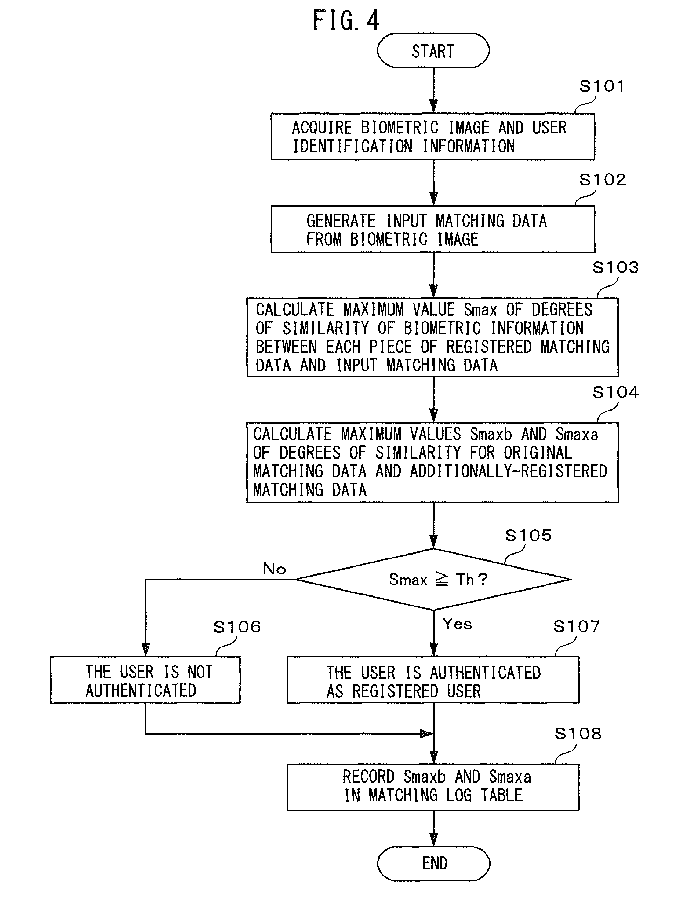

Figure 4 is a diagram illustrating an operational flowchart of a biometric authentication process controlled by a computer program executed on the processing unit 7. As illustrated in Figure 4, the processing unit 7 acquires from the biometric information acquisition unit 4 a biometric image in which biometric information of a user requesting authentication is captured. The processing unit 7 also acquires user identification information of a registered user to be matched from the input unit 3 (step S101). The reference data generation unit 11 generates input reference data from the biometric image (step S102). The reference data generation unit 11 passes the input reference data to the matching unit 12.

The matching unit 12 calculates the maximum value Smax among degrees of similarity between the input reference data and each piece of registered reference data of a registered user corresponding to inputted user identification information (step S103). The matching unit 12 passes the maximum value Smax and the user identification information of the registered user to the authentication determination unit 13. Furthermore, the matching unit 12 obtains the maximum value Smaxb among degrees of similarity calculated for the originally-registered reference data and the maximum value Smaxa among degrees of similarity calculated for the additionally-registered registered reference data (step S104). The matching unit 12 passes the maximum values Smaxb and Smaxa to the matching log update unit 14.

The authentication determination unit 13 determines whether or not the maximum value Smax of matching scores is equal to or greater than an authentication determination threshold value Th (step S105). When the maximum value Smax of the matching scores is less than the authentication determination threshold value Th (No at step S105), the authentication determination unit 13 does not authenticate the user and causes the display unit 2 to display that the user is not authenticated (step S106). On the other hand, when the maximum value Smax of the matching scores is equal to or greater than the authentication determination threshold value Th (Yes at step S105), the authentication determination unit 13 authenticates the user as the registered user (step S107).

After step S106 or S107, the matching log update unit 14 records Smaxb and Smaxa in the matching log table for the registered user corresponding to the inputted user name or user identification number (step S108). Then, the processing unit 7 terminates the biometric authentication process.

Note that a sequence of a process of steps S105 to S107 and a process of step S108 may be interchanged or they may be executed in parallel. Furthermore, a sequence of a process of step S103 and a process of S104 may be interchanged.

### (Additional registration process)

Next, an additional registration process for additionally registering reference data will be explained. In some cases, reference data generated from a biometric image which is obtained when a user intending to use the biometric authentication device 1 is registered at the first time is not appropriate for a matching process. For example, when a positioning of a body part including biometric information against the biometric information acquisition unit 4 is not appropriate, there are cases that reference data extracted from an acquired biometric image does not appropriately represent a feature of biometric information of the registered user. There are also cases that a difference between biometric information represented in originally-registered reference data and biometric information represented in reference data generated at a time of execution of a biometric authentication process becomes large due to aging of a boy part including the biometric information. In addition, there are some registered users who may not obtain a high degree of similarity in a matching process due to compatibility between biometric information and algorithm of a matching process and the like.

Thus, an additional registration of reference data is performed in order to increase an authentication success rate. When reference data is additionally registered, an administrator, for example, inputs user identification information of a registered user attempting to additionally register reference data via the input unit 3. The biometric information acquisition unit 4 generates a biometric image by reading biometric information of the registered user and outputs the biometric image to the processing unit 7. When the processing unit 7 receives the biometric image, the reference data generation unit 11 generates reference data from the biometric image and passes the reference data to the additional registration unit 15.

The additional registration unit 15 obtains the user identification information of the registered user from the input unit 3. Furthermore, the additional registration unit 15 stores the reference data received from the reference data generation unit 11 as additionally-registered reference data of the registered user in the storage unit 6, together with the user identification information of the registered user. In addition, the additional registration unit 15 sets a value of a category flag associated with the additionally-registered reference data to a value indicating that it belongs to a category of additionally-registered reference data. Furthermore, the additional registration unit 15 may associate additional date and time information indicating a date and time in which additional registration is performed, with the additionally-registered reference data.

Note that pieces of reference data to be additionally registered at a time for one registered user is not limited to one and may be plural. In particular, it is most likely that those who need additional registration of reference data are registered users having low authentication success rates. Thus, in order to improve the authentication success rate, while changing a positioning of a body part, in the present embodiment a palm, including biometric information of a registered user to be additionally registered, the biometric information acquisition unit 4 generates a plurality of biometric images by capturing the palm a plurality of times. It is preferable that the reference data generation unit 11 generates respective reference data from each biometric image and the additional registration unit 15 additionally register each piece of reference data.

### (Additional registration data verification process)

Next, an additional registration data verification process will be explained which is an example of a reference data verification process and verifies whether or not additionally-registered reference data is that of the registered user. As described above, when reference data is additionally registered, reference data representing biometric information of another person may be registered as reference data of the registered user, for example, by an administrator erroneously inputting user identification information. By executing the additional registration data verification process, the biometric authentication device 1 can verify whether or not biometric information represented in the additionally-registered reference data is biometric information of the registered user.

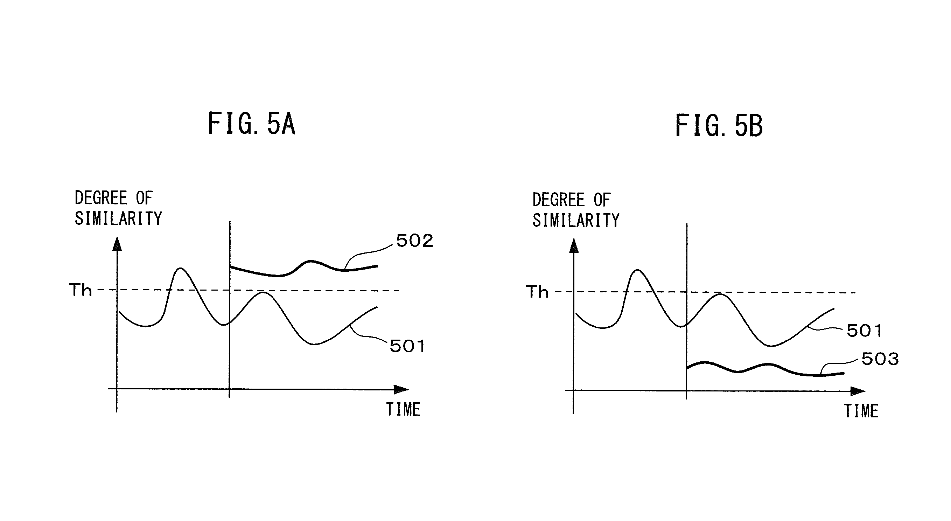

Figure 5A is a diagram illustrating an example of a log of degrees of similarity at a time when reference data representing biometric information of a registered user has been additionally registered. On the other hand, Figure 5B is a diagram illustrating an example of a log of degrees of similarity at a time when reference data representing biometric information of another person has been additionally registered by mistake. In Figure 5A and Figure 5B, the horizontal axis represents time and the vertical axis represents a degree of similarity. It is assumed that reference data is additionally registered at a time t0. Th is the authentication determination threshold value.

In Figure 5A, a graph 501 represents a log of the maximum value Smaxb of degrees of similarity for the original reference data. While, a graph 502 represents a log of the maximum value Smaxa of degrees of similarity for the additionally-registered reference data. When the original reference data is not appropriate for using in the matching process, Smaxb sometimes exceeds and sometimes does not exceed the authentication determination threshold value Th, as illustrated in the graph 501. Thus, reference data is additionally registered to improve the authentication success rate. When the additionally-registered reference data represents biometric information of the registered user, the registered user is familiar with the use of the biometric authentication device 1 as compared to a time when reference data was registered at the first time. Therefore, a positioning of a body part including biometric information against the biometric information acquisition unit 4 tends to be appropriate. Accordingly, as illustrated in the graph 502, Smaxa is likely higher than the authentication determination threshold value Th.

In Figure 5B, a graph 501 represents a log of the maximum value Smaxb of degrees of similarity for the original reference data. On the other hand, a graph 503 represents a log of the maximum value Smaxa of degrees of similarity for additionally-registered reference data representing biometric information of another person. Since biometric information of different persons is generally significantly different, Smaxa is always a low value as illustrated in the graph 503 when reference data representing biometric information of another person has been additionally registered by mistake.

Thus, after reference data has been additionally registered, the verification unit 16 examines the maximum value Smaxa of degrees of similarity for the additionally-registered reference data by referring to the matching log table. Then, it is determined based on Smaxa whether or not the additionally-registered reference data is that of the registered user.

With respect to the registered user who has additionally registered reference data, the verification unit 16 determines whether or not the number of execution of the biometric authentication process for the registered user, which having been executed after the additional registration of the reference data, has reached a predetermined number of times by referring to the matching log table. Note that the predetermined number of times is set, for example, to about one to ten times. When the number of execution of the biometric authentication process after adding the reference data has reached the predetermined number of times, the verification unit 16 calculates a statistical representative value of the maximum values Smaxa of degrees of similarity in each biometric authentication process for the additionally-registered reference data. In the present embodiment, the verification unit 16 calculates the average value Sava of the maximum values Smaxa of degrees of similarity as the statistical representative value. Alternatively, the verification unit 16 may calculate a median value of the maximum values Smaxa of degrees of similarity as the statistical representative value.

The verification unit 16 compares the average value Sava with a verification threshold value. Then, the verification unit 16 determines that the additionally-registered reference data represents biometric information of the registered user when the average value Sava is equal to or greater than the verification threshold value. On the other hand, when the average value Sava is less than the verification threshold value, the verification unit 16 determines that the additionally-registered reference data represents biometric information of another person different from the registered user. Note that the verification threshold value is, for example, set to a value lower than the authentication determination value and higher than the maximum value of degrees of similarity among pieces of biometric information of different persons, for example, an average value of the maximum value and the minimum value of possible values of a degree of similarity.

When having determined that the additionally-registered reference data represents biometric information of another person different from the registered user, the verification unit 16 associates a prohibition flag with the user identification information of the registered user, the prohibition flag indicating that the registered user is not allowed to use the biometric authentication device 1. When user identification information inputted via the input unit 3 matches the user identification information associated with the prohibition flag, the processing unit 7 does not execute the biometric authentication process. Therefore, the biometric authentication device 1 can prevent another person pretending to be a registered user from being authenticated.

In addition, the verification unit 16 sends warning information indicating that reference data has been erroneously registered, together with user identification information of the registered user, to, for example, a device used by an administrator via the communication unit 5. Thus, since the administrator can recognize that erroneous registration of reference data has occurred, deletion of the reference data erroneously registered and notification to the corresponding registered user can be performed without delay. Note that it is preferable that the warning information do not include information related to a degree of similarity such as Sava, Smaxa or the like. Accordingly, it will be difficult to perform the hill climbing attack since a third party may not obtain information related to a degree of similarity even by analyzing the warning information.

Note that, according to a modified example, when having determined that the additionally-registered reference data represents biometric information of another person different from the registered user, the verification unit 16 may associate an invalid flag indicating that data is unusable with the additionally-registered reference data. In this case, the processing unit 7 may use only the original reference data without using the additionally-registered reference data in the subsequent biometric authentication process. In this modified example, the registered user may continue to use the biometric authentication device 1 although there is no improvement in the authentication success rate since a situation for the registered user is not changed from the situation before the additional registration of the reference data. Therefore, the biometric authentication device 1 can prevent another person pretending to be a registered user from being authenticated without giving a significant disadvantage to the registered user. Note that it is also preferable in this modified example that the verification unit 16 send warning information indicating that reference data has been erroneously registered, together with user identification information of the registered user, to, for example, a device used by an administrator via the communication unit 5.

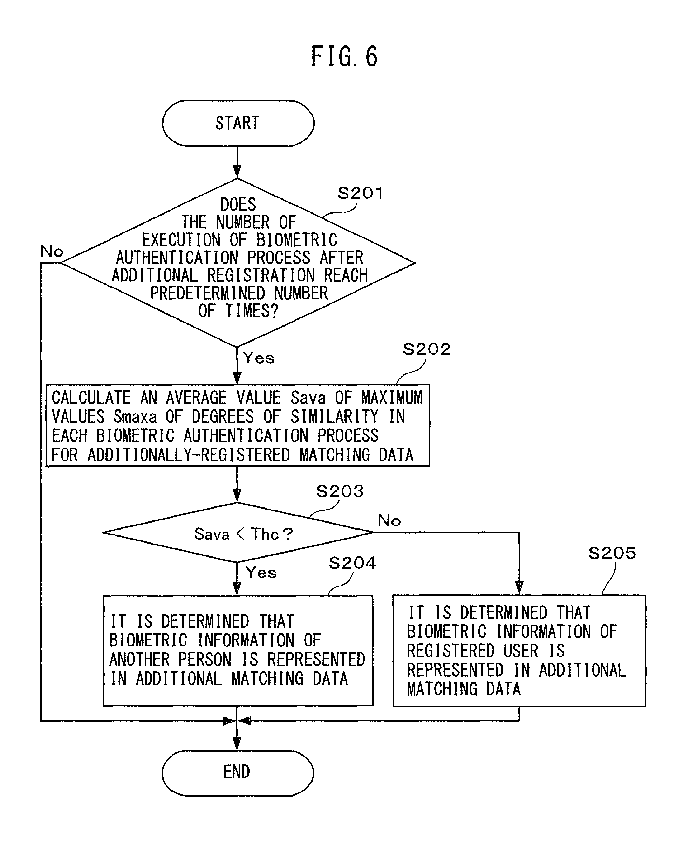

Figure 6 is an operational flowchart of an additional registration data verification process executed by the verification unit 16. The additional registration data verification process is executed every time the biometric authentication process is executed.

The verification unit 16 determines whether or not the number of execution of the biometric authentication process executed after additional registration of reference data has reached a predetermined number of times by referring to the matching log table (step S201). When the number of execution of the biometric authentication process executed after the additional registration of reference data has not reached the predetermined number of times (No at step S201), the verification unit 16 terminates the additional registration data verification process. On the other hand, when the number of execution after the additional registration has reached the predetermined number of times (Yes at step S201), the verification unit 16 refers to the matching log table. The verification unit 16 then calculates the average value Sava of the maximum values Smaxa of degrees of similarity calculated for the additionally-registered reference data in each biometric authentication process (step S202).

The verification unit 16 determines whether or not the average value Sava of the maximum values of degrees of similarity is less than a verification threshold value The (step S203). When the average value Sava of the maximum values of degrees of similarity is less than the verification threshold value The (Yes at step S203), the verification unit 16 determines that the additionally-registered reference data represents biometric information of another person (step S204). The verification unit 16 then stores, in the storage unit 6, the user identification information of the registered user in association with the prohibition flag. In addition, the verification unit 16 sends warning information indicating that reference data has been erroneously registered, together with the user identification information of the registered user, to, for example, a device used by an administrator via the communication unit 5.

On the other hand, when the average value Sava of the maximum values of degrees of similarity is equal to or greater than the verification threshold value The (No at step S203), the verification unit 16 determines that the additionally-registered reference data represents biometric information of the registered user (step S205).

After step S204 or S205, the verification unit 16 terminates the additional registration data verification process.

Note that, according to a modified example, the verification unit 16 may execute processes on and after step S202 when a predetermined period (for example, one week or one month) has elapsed after additional registration of reference data. In this modified example, when the biometric authentication process has never been performed within the predetermined period, the verification unit 16 may postpone execution of the processes on and after step S202 until the predetermined period elapses again.

As has been explained above, even when reference data representing biometric information of another person different from a registered user is additionally registered by some mistakes when reference data of the registered user is additionally registered, the biometric authentication device can detect the fact. Therefore, the biometric authentication device can prevent another person pretending to be a registered user from being authenticated due to the fact that reference data representing biometric information of another person is additionally registered by mistake.

According to a modified example, every time a biometric authentication process is performed, the matching unit 12 may notify the matching log update unit 14 of a value of the category flag of a larger one between the maximum value Smaxb of degrees of similarity of the original reference data and the maximum value Smaxa of degrees of similarity of the additionally-registered reference data.

The matching log update unit 14 may record the value of the category flag notified from the matching unit 12 in a matching log table every time a biometric authentication process is performed.

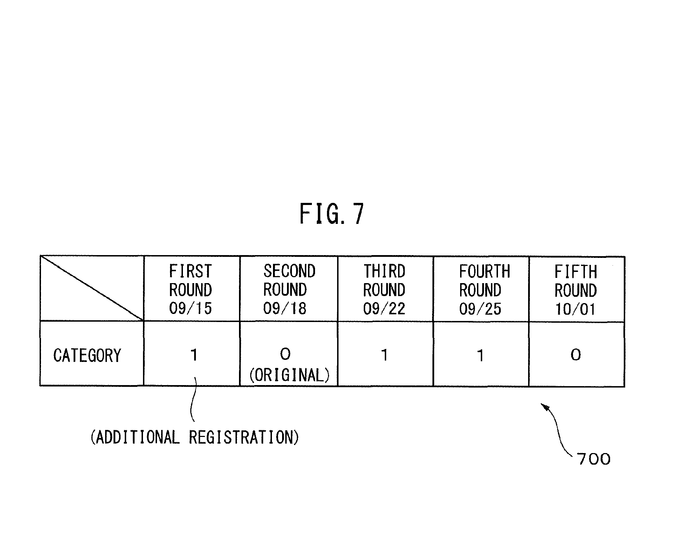

Figure 7 is a diagram illustrating an example of a matching log table according to this modified example. In a matching log table 700, a value of the category flag of a larger one between the maximum value Smaxb of degrees of similarity of the original reference data and the maximum value Smaxa of degrees of similarity of the additionally-registered reference data is recorded in each column. For example, in the first, third and fourth biometric authentication processes after additional registration, a value of the category flag representing the additionally-registered reference data (for example, '1') is recorded. On the other hand, in the second and fifth biometric authentication processes, a value of the category flag representing the original reference data (for example, '0') is recorded.

When the additionally-registered reference data represents biometric information of the registered user, biometric information represented in the additionally-registered reference data is at least as suitable for the matching process as the original reference data. Accordingly, when the biometric authentication process is performed a plurality of times, it can be assumed that the maximum value Smaxa of degrees of similarity of the additionally-registered reference data become, at least once, higher than the maximum value Smaxb of degrees of similarity of the original reference data.

The verification unit 16 refers to the matching log table for a registered user for whom the number of execution of the biometric authentication process after additional registration has reached the predetermined times. The verification unit 16 then determines that the additionally-registered reference data represents biometric information of the registered user when the value of the category flag indicating the additionally-registered reference data has been even once recorded. On the other hand, the verification unit 16 determines that the additionally-registered reference data represents biometric information of another person when the value of the category flag indicating the additionally-registered reference data has not been recorded even once. Note that the verification unit 16 may determine that the additionally-registered reference data represents biometric information of another person when the value of the category flag indicating the additionally-registered reference data is equal to or less than a predetermined threshold value (for example, one to two).

According to the modified example, since only a value of the category flag is recorded in the matching log table, it is difficult to perform the hill climbing attack by referring to the matching log table even when the matching log table is known to a third party by any chance. Therefore, a biometric authentication device according to the modified example can improve the security.

Next, a biometric authentication device according to a second embodiment will be explained. The biometric authentication device according to the second embodiment calculates a degree of similarity of biometric information between reference data which is to be additionally registered and the original reference data. The biometric authentication device then determines that the reference data which is to be additionally registered represents biometric information of a registered user when a value of the degree of similarity is included within an additional registration tolerance range.

In the biometric authentication device according to the second embodiment, the matching unit 12, the additional registration unit 15 and the verification unit 16 are used in the additional registration process and functions of the matching unit 12, the additional registration unit 15 and the verification unit 16 are different, compared to the biometric authentication device according to the first embodiment. In the following, the additional registration process executed by the matching unit 12, the additional registration unit 15 and the verification unit 16 will be explained. With respect to other structural elements of the biometric authentication device according to the second embodiment, refer to the description of the corresponding structural elements of the biometric authentication device according to the first embodiment. In addition, the additional registration data verification process may not be performed in the second embodiment, since it is determined whether or not biometric information of reference data which is to be additionally registered is that of the registered user in the additional registration process which is another example of the reference data verification process.

Upon receiving reference data which is to be additionally registered from the matching data generation unit 11, the matching unit 12 executes the matching process between the reference data and original reference data for a registered user identified by user identification information inputted via the input unit 3. The matching unit 12 then calculates a degree of similarity between biometric information represented in the reference data which is to be additionally registered and biometric information represented in the original reference data. Note that the matching process performed in this case may be the same process as the matching process according to the first embodiment except for the reference data to be compared.

When there is a plurality of pieces of original reference data, the matching unit 12 executes a respective matching process between reference data which is to be additionally registered and each piece of the original reference data to calculate a degree of similarity for each piece of the original reference data. The matching unit 12 then obtains the maximum value among the degrees of similarity. Furthermore, when there is a plurality of pieces of reference data which is to be additionally registered, the matching unit 12 executes the process described above for each piece of the reference data which is to be additionally registered. For example, when three pieces of original reference data are stored in the storage unit 6 and there are three pieces of the reference data which is to be additionally registered, the matching process is executed nine times in total and the maximum value of degrees of similarity is calculated for each piece of the reference data which is to be additionally registered. The matching unit 12 then calculates, as an additional registration determination value, a statistical representative value such as an average value or a median value of the maximum values of degrees of similarity calculated for each piece of the reference data which is to be additionally registered and notifies the verification unit 16 of the additional registration determination value.

The verification unit 16 determines whether or not the additional registration determination value is included in the additional registration tolerance range. Then, the verification unit 16 determines that the reference data which is to be additionally registered represents biometric information of the registered user when the additional registration determination value is included in the additional registration tolerance range.

A registered user who requires additional registration of reference data is likely a registered user who inherently tends to fail in authentication. It is possible that, for such a registered user, a degree of similarity calculated between the reference data which is to be additionally registered and reference data generated from a biometric image obtained at a time of a biometric authentication process does not also exceed the authentication determination threshold value. Therefore, it is preferable that when, for example, differences between degrees of similarity of the latest several times for the registered user and the additional registration determination value are small, the additional registration tolerance range is set such that reference data which is to be additionally registered can be additionally registered.

For example, the verification unit 16 refers to a matching log table of a registered user identified by user identification information inputted via the input unit 3. The verification unit 16 then calculates an average value Savb and a standard deviation σ of the maximum values Smaxb of degrees of similarity for original reference data in the biometric authentication process of the latest several rounds or performed during a latest predetermined period (for example, one week to one month). The verification unit 16 sets a range of values of degrees of similarity of ±2σ centered on the average value Savb to be the additional registration tolerance range.

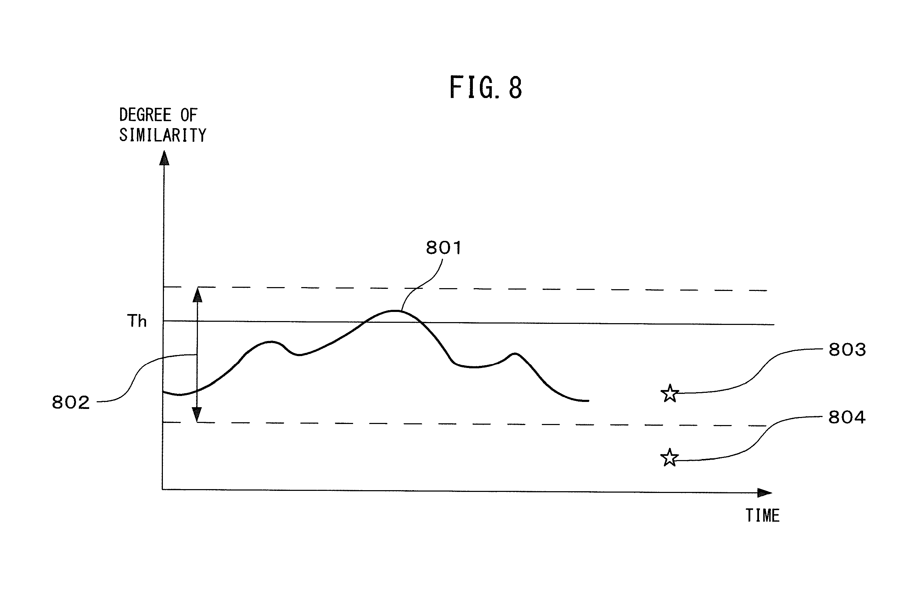

Figure 8 is a diagram illustrating an example of the relationship between a degree of similarity of biometric information between reference data to be additionally registered and original reference data and a log of degrees of similarity for the original reference data in the latest biometric authentication process. In Figure 8, the horizontal axis represents time and the vertical axis represents a degree of similarity. A graph 801 represents the maximum values Smaxb of degrees of similarity for original reference data in the latest several rounds. A range 802 sandwiched between two dotted lines represents the additional registration tolerance range. Th is the authentication determination threshold value.

When an additional registration determination value is a value indicated by a point 803, the point 803 is lower than the authentication determination threshold value Th but is included in the additional registration tolerance range 802 and the additional registration determination value is a value close to degrees of similarity in the biometric authentication process of the latest several times. Thus, the verification unit 16 determines that biometric information represented in the reference data which is to be additionally registered is that of the registered user. The verification unit 16 passes the reference data which is to be additionally registered together with the user identification information to the additional registration unit 15. The additional registration unit 15 additionally registers the reference data which is to be additionally registered as reference data of the registered user. On the other hand, when an additional registration determination value is a value indicated by a point 804, the point 804 deviates from the additional registration tolerance range 802 and the additional registration determination value is apart from degrees of similarity in the biometric authentication process of the latest several rounds. Thus, the verification unit 16 determines that biometric information represented in the reference data which is to be additionally registered is that of another person and discards the reference data which is to be additionally registered.

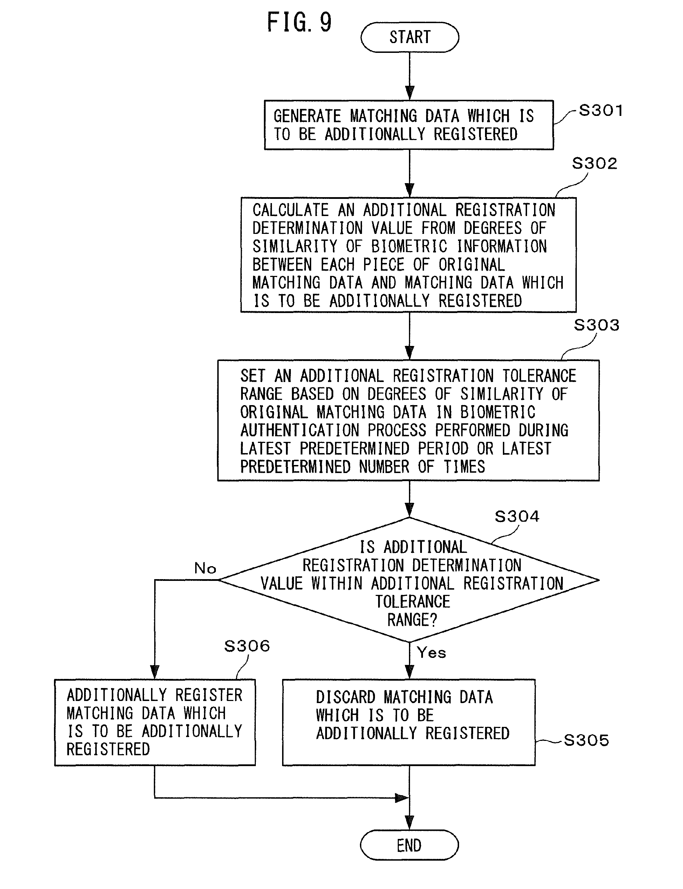

Figure 9 is a diagram illustrating an operational flowchart of an additional registration process according to the second embodiment. The reference data generation unit 11 generates respective reference data which is to be additionally registered from at least one biometric image generated by the biometric information acquisition unit 4 at a time of additional registration (step S301). The reference data generation unit 11 then passes the reference data which is to be additionally registered to the matching unit 12.

The matching unit 12 calculates the additional registration determination value by performing the matching process between each piece of the reference data which is to be additionally registered and original reference data of a registered user identified by user identification information inputted from the input unit 3 (step S302). The verification unit 16 sets the additional registration tolerance range based on degrees of similarity of the original reference data in the biometric authentication process performed during a latest predetermined period or a latest predetermined number of times by referring to the matching log table of the registered user (step S303).

The verification unit 16 determines whether or not the additional registration determination value is included in the additional registration tolerance range (step S304). When the additional registration determination value is included in the additional registration tolerance range (Yes at step S304), the verification unit 16 determines that biometric information of the registered user is represented in each piece of the reference data which is to be additionally registered. The additional registration unit 15 additionally registers each piece of the reference data which is to be additionally registered as reference data of the registered user (step S305).

On the other hand, when the additional registration determination value is not included in the additional registration tolerance range (No at step S304), the verification unit 16 determines that biometric information of another person is represented in each piece of the reference data which is to be additionally registered. The verification unit 16 then discards each piece of the reference data which is to be additionally registered (step S306). In addition, the verification unit 16 may cause a display unit to display a warning message indicating that reference data representing biometric information of another person has been attempted to be registered. After step S305 or S306, the biometric authentication device terminates the additional registration process.

According to the second embodiment, the biometric authentication device allows additional registration when a degree of similarity of biometric information between reference data which is to be additionally registered and original reference data is close to a degree of similarity for the original reference data in the latest biometric authentication process. Therefore, the biometric authentication device can additionally register reference data for a registered user who is hardly authenticated. In addition, there is no risk that reference data representing biometric information of another person is additionally registered by mistake since the biometric authentication device verifies whether or not biometric information represented in reference data which is to be additionally registered is that of the registered user at a time of additional registration. Accordingly, the biometric authentication device can prevent another person pretending to be a registered user from being authenticated.

Note that additional registration of reference data may be performed multiple times for each registered user. In this case, the biometric authentication device may perform the additional registration process or the additional registration data verification process according to the embodiments or modified examples described above, by handling reference data which has been additionally registered in the past as original reference data every time additional registration of reference data is performed.

According to another modified example, the biometric authentication device may execute the biometric authentication process by the so-called one-to-N authentication scheme. In this case, the matching unit 12 may calculate degrees of similarity for all pieces of reference data for all registered users. When the maximum value of calculated degrees of similarity is equal to or greater than the authentication determination threshold value, the authentication determination unit 13 may authenticate a user as a registered user corresponding to the maximum value. The matching log update unit 14 may record Smaxb and Smaxa calculated based on reference data of the registered user in a matching log table of a registered user corresponding to the maximum value among calculated degrees of similarity.

According to still another modified example, a biometric authentication processing unit may automatically extract a registered user whose degree of similarity is low on average as a registered user who may additionally register reference data, referring to a matching log table for each registered user. For example, the processing unit calculates, for each registered user, an average value of the maximum values of degrees of similarity of each piece of reference data in the biometric authentication process performed during a latest predetermined period (for example, one week to six months) or a predetermined number of times (for example, ten to 100 times) in the most recent past.

Then, the processing unit extracts a registered user whose average value is less than an additional registration recommendation determination threshold value and generates an additional registration candidate list to store user identification information of the extracted registered user. Note that the additional registration recommendation determination threshold value may be, for example, a value obtained by multiplying the authentication determination threshold value by 0.9 to 1.1. An administrator may identify a registered user who may additionally register reference data by reviewing the additional registration candidate list periodically (for example, every week). The administrator may notify the registered user who may additionally register of urging additional registration of reference data. Alternatively, the processing unit may send a notification (for example, an email) of urging additional registration of reference data to a registered user having user identification information registered in the additional registration candidate list, referring to the additional registration candidate list periodically. As a result, a risk that reference data representing biometric information of another person is additionally registered by mistake drops since an operation of entering user identification information by an administrator is omitted.

Furthermore, the processing unit 7 may suppress the upper limit of the number of registered users who can additionally register per day to a small number, for example, one to two in order to eliminate errors at a time of additional registration as much as possible. The processing unit 7 lists a date available for additional registration on a notification of urging additional registration and sets the number of registered users specified in a same day to a number equal to or less than the upper limit described above. As a result, the biometric authentication device reduces a probability that an administrator erroneously enters user identification information due to mistaking a registered user to perform additional registration of reference data for another registered user.

In addition, when user names or user identification numbers of registered users attempting to additionally register reference data are similar each other (for example, only one character is different), the processing unit 7 may assign different dates available for additional registration of reference data for the registered users.

Furthermore, the biometric authentication device and the reference data verification method disclosed in the present specification are applicable to various devices and systems which execute a biometric authentication process between biometric information of a user and biometric information registered in advance in order for the user to perform some operations. For example, the biometric authentication device may be implemented in an automatic teller machine or an input device for entry/exit permission. For example, such a device or system includes a computer system in which one or more terminals and a server are connected via a communication network. In this case, a biometric information acquisition unit is provided in each terminal and biometric information acquired by the biometric information acquisition unit is sent to the server. The server executes a registration process or a biometric authentication process of biometric information by executing the functions of the processing unit of the embodiments described above.

In addition, a processor of each terminal may include the function of the reference data generation unit among the functions of the processing unit of each embodiment described above. On the other hand, a processor of the server may include the functions of the matching unit, the authentication determination unit, the log update unit, the additional registration unit and the verification unit. As a result, a processing load for the server processor may be reduced.

A computer program including instructions for causing a computer to implement the function of the processing unit according to each embodiment described above may be provided in a form recorded in a computer-readable recording medium such as a non-volatile semiconductor memory, a magnetic recording medium and an optical recording medium. Note that a carrier is not included in the computer-readable recording medium.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present inventions have been described in detail, it should be understood that the various changes, substitutions, and alterations could be made hereto without departing from the spirit and scope of the invention.

## Claims

1. A reference data verification method comprising:
matching first reference data representing biometric information registered for a registered user with second reference data representing a same type of biometric information of the registered user as biometric information represented in the first reference data, the second reference data having been registered for the registered user before the first reference data, or third reference data representing biometric information of the registered user generated based on the same type of biometric information of the registered user as biometric information represented in the first reference data at a time of a biometric authentication process to calculate a degree of similarity between biometric information represented in the first reference data and biometric information represented in the second or third reference data; and
determining whether or not biometric information represented in the first reference data is biometric information of the registered user based on the degree of similarity.

2. The reference data verification method according to claim 1, further comprising recording, in a matching log table, the degree of similarity calculated between the third reference data and the first reference data every time the third reference data is generated, wherein
the determining whether or not biometric information represented in the first reference data is biometric information of the registered user, calculates a statistical representative value of the degree of similarity calculated between the third reference data and the first reference data recorded in the matching log table and determines that the biometric information represented in the first reference data is biometric information of a person different from the registered user when the statistical representative value is less than a first threshold value.

3. The reference data verification method according to claim 2, wherein the first threshold value is set to a value lower than a second threshold value used to determine whether or not authentication is successful by comparing with the degree of similarity.

4. The reference data verification method according to claim 2 or 3, wherein a plurality of pieces of the first reference data exists,
the recording the degree of similarity in the matching log table, records a maximum value among the degrees of similarity calculated for each of the plurality of pieces of the first reference data in the matching log table, and
the determining whether or not biometric information represented in the first reference data is biometric information of the registered user, calculates an average value of the maximum values of the degrees of similarity recorded in the matching log table as the statistical representative value.

5. The reference data verification method according to claim 1, further comprising:
calculating a first degree of similarity between the third reference data and the first reference data and calculating a second degree of similarity between the third reference data and the second reference data, every time the third reference data is generated; and
recording an index indicating a larger one among the first degree of similarity and the second degree of similarity in a matching log table, wherein
the determining whether or not biometric information represented in the first reference data is biometric information of the registered user, determines that the biometric information represented in the first reference data is biometric information of a person different from the registered user when an index indicating that the first degree of similarity is larger than the second degree of similarity is not recorded in the matching log table when the first degree of similarity and the second degree of similarity have been calculated a predetermined number of times.

6. The reference data verification method according to any one of claims 1 to 5, further comprising invalidating the first reference data when it has been determined that the biometric information represented in the first reference data is biometric information of a person different from the registered user.

7. The reference data verification method according to claim 1, wherein, the calculating the degree of similarity between biometric information represented in the first reference data and biometric information represented in the second or third reference data, calculates the degree of similarity between the first reference data and the second reference data, and
the determining whether or not biometric information represented in the first reference data is biometric information of the registered user, determines that biometric information represented in the first reference data is biometric information of the registered user when the degree of similarity between the first reference data and the second reference data is included in a predetermined tolerance range.

8. The reference data verification method according to claim 7, further comprising storing the first reference data in association with identification information of the registered user in a storage unit when it has been determined that biometric information represented in the first reference data is biometric information of the registered user.

9. The reference data verification method according to claim 7 or 8, further comprising recording, in a matching log table, the degree of similarity calculated between the third reference data and the second reference data every time the third reference data is generated, wherein
the determining whether or not biometric information represented in the first reference data is biometric information of the registered user, calculates an average value and a standard deviation of the degrees of similarity recorded in the matching log table and set the tolerance range based on the average value and the standard deviation.

10. The reference data verification method according to any one of claims 7 to 9, further comprising discarding the first reference data when the degree of similarity between the first reference data and the second reference data deviates from the predetermined tolerance range.

11. A biometric authentication device comprising:
a matching unit (12) which matches first reference data representing biometric information registered for a registered user with second reference data representing a same type of biometric information of the registered user as biometric information represented in the first reference data, the second reference data having been registered for the registered user before the first reference data, or third reference data representing biometric information of the registered user generated based on the same type of biometric information of the registered user as biometric information represented in the first reference data at a time of a biometric authentication process to calculate a degree of similarity between biometric information represented in the first reference data and biometric information represented in the second or third reference data; and
a verification unit (16) which determines whether or not biometric information represented in the first reference data is biometric information of the registered user based on the degree of similarity.

12. A reference data verification computer program that causes a computer to execute a process comprising:
matching first reference data representing biometric information registered for a registered user with second reference data representing a same type of biometric information of the registered user as biometric information represented in the first reference data, the second reference data having been registered for the registered user before the first reference data, or third reference data representing biometric information of the registered user generated based on the same type of biometric information of the registered user as biometric information represented in the first reference data at a time of a biometric authentication process to calculate a degree of similarity between biometric information represented in the first reference data and biometric information represented in the second or third reference data; and
determining whether or not biometric information represented in the first reference data is biometric information of the registered user based on the degree of similarity.
